# EUROPÄISCHE PATENTSCHRIFT

(11) **EP 2 108 856 B1**
(45) Veröffentlichungstag und Bekanntmachung des Hinweises auf die Patenterteilung: **05.09.2012**
(21) Anmeldenummer: 09001279.0
(22) Anmeldetag: 30.01.2009
(51) Int. Cl.: F16D 65/12, F16D 55/00

(54) **Innenbelüftete Scheibenbremse für Kraftfahrzeuge**
Internally ventilated disc brake for motor vehicles
Frein à disque à aération interne pour véhicules automobiles

(30) Priorität: 11.04.2008 DE 102008018338
(43) Veröffentlichungstag der Anmeldung: 14.10.2009
(73) Patentinhaber: AUDI AG, 85045 Ingolstadt (DE)
(72) Erfinder: Waninger, Robert, 85055 Ingolstadt (DE); Zupan, Nikola, 85104 Pförring (DE)
(74) Vertreter: Asch, Konrad

(56) Entgegenhaltungen:
- EP-A1- 0 235 382
- EP-A1- 1 500 840
- EP-A1- 2 048 404
- DE-C1- 19 639 147
- DE-C1- 19 908 914
- JP-A- 6 249 273
- JP-A- 2007 002 998
- US-A- 4 317 508
- US-B1- 6 260 669

## Beschreibung

Die Erfindung betrifft eine innenbelüftete Scheibenbremse für Kraftfahrzeuge gemäß dem Oberbegriff des Patentanspruches 1.

Bei derartigen Scheibenbremsen (siehe z.B. US 4 317 508) ist es üblich, an der innenliegenden Reibscheibe der Bremsscheibe ein Abdeckblech anzuordnen, das zum einen von der Bremsscheibe abstrahlende Hitze abschirmt und zum anderen im Fahrbetrieb ggf. aufgewirbeltes Regenwasser und Schmutz von der inneren Reibfläche der Bremsscheibe im wesentlichen fernhält. Die Beaufschlagung sowohl der inneren, als auch der äußeren Reibfläche der Bremsscheibe mit Regenwasser und Schmutz wird auch durch die integrierten Kühlkanäle beeinflusst, weil diese neben der erwünschten zentrifugalen Kühlluftförderung auch Wasser und Schmutz ansaugen und in die Scheibenbremse eintragen.

Aufgabe der Erfindung ist es, eine Scheibenbremse der gattungsgemäßen Art vorzuschlagen, bei der mit fertigungstechnisch einfachen Mitteln eine verbesserte Abschirmung der Reibflächen der Bremsscheibe erzielbar ist.

Diese Aufgabe wird erfindungsgemäß mit den Merkmalen des Patentanspruches 1 gelöst. Vorteilhafte Weiterbildungen der Erfindung sind Gegenstand der Unteransprüche.

Erfindungsgemäß sind Mittel vorgesehen, die einen Kühlluftstrom im Wesentlichen unmittelbar in einen oder zu einem Einströmbereich des wenigstens einen Kühlkanals hin leiten. Derartige Mittel bzw. Leitelemente sind zum einen durch ein Abschirmblech gebildet, insbesondere durch ein ohnehin vorhandenes Abschirmblech, das dann zum Einströmbereich in den wenigstens einen Kühlkanal hin entsprechend konstruktiv gestaltet wird. Zusätzlich dazu ist, in Verbindung mit einem Aufbau der Scheibenbremse, bei dem die Bremsscheibe an einen Nabentopf der Scheibenbremse angebunden ist, ein Mittel bzw. Leitelement auch direkt nabentopfseitig angeordnetnämlich dort an einem einströmbereichnahen Nabentopfbereich angeformt, insbesondere als umlaufender Ringbund: Ein solcher Ringbund kann ringförmig geschlossen umlaufend ausgebildet sein. Selbstverständlich kann dieser Ringbund aber auch abschnittsweise unterbrochen sein und können z. B. lediglich im Bereich der Kühlkanal-Einströmbereiche angeordnete Leitstege oder dergleichen vorgesehen sein, die z. B. nasenartige Leitelemente ausbilden. Nachfolgend soll in Verbindung mit der Begrifflichkeit Ringbund diese Leitsteg-Ausführungsform ausdrücklich stets mit eingeschlossen sein, sofern dies nicht explizit anders erwähnt ist, wenngleich die umlaufende Ringbund-Variante die bevorzugte Ausführungsform darstellt.

Mit einer derartigen erfindungsgemäßen Beeinflussung des Kühlluftstroms wird vorteilhaft vermieden, dass Wasser durch z. B. die Zentrifugalkraft bedingt im Bereich zwischen Nabentopf und Bremsscheibe austritt. Vielmehr wird hier dem Kühlluftstrom eine solche Strömungsrichtung aktiv aufgezwungen, dass dieser stets in den Kühlluftkanal unmittelbar einströmen kann.

Weiter wird vorgeschlagen, dass an dem Nabentopf und/oder an dem Abschirmblech Mittel angeordnet sind, die den von den Kühlkanälen radial nach außen geförderten Kühlluftstrom unter Abschirmung der Reibflächen der Bremsscheibe in den unmittelbaren Einströmbereich der Kühlkanäle leiten. Damit gelingt es, unerwünschte Eintragungen wie Wasser und Schmutz vermehrt von den Reibflächen fernzuhalten und den Kühlluftstrom unmittelbar in die Rotationsebene der Kühlluftkanäle einzuleiten.

In bevorzugter; baulich besonders einfacher Weise ist dazu an dem Abschirmblech ein axial nach innen ragender, ringförmiger Kragen vorgesehen, der in den Innenumfang der Bremsscheibe mit definiertem Umfangsspiel einragt.

Der ringförmige Kragen kann sich im Längsschnitt gesehen bis mindestens zur Rotationsebene der Kühlkanäle erstrecken. Damit wird aerodynamisch günstig der Kühlluftstrom zunächst axial gerichtet an der inneren Reibfläche der Bremsscheibe vorbei geleitet und dann unter Umlenkung in radialer Richtung unmittelbar den Kühlluftkanälen zugeführt.

Fertigungstechnisch besonders günstig kann der ringförmige Kragen unmittelbar an das Abschirmblech angeformt sein; es könnte aber auch ein entsprechendes Luftleitteil auf das Abschirmblech aufgesteckt oder an diesem anderweitig befestigt sein.

Des weiteren kann an dem Außenumfang des Abschirmbleches zumindest an dessen entgegen der Fahrtrichtung des Kraftfahrzeuges liegendem Umfangsabschnitt eine von der Reibfläche weg verlaufende, ringförmige Abweislippe vorgesehen sein, die z.B. an dem Abschirmblech an dessen Außenseite entlang strömendes Regenwasser von der Reibfläche weg leitet.

Die Scheibenbremse verfügt über einen separaten Nabentopf und eine an dessen Befestigungsflansch über Befestigungsmittel befestigte Bremsscheibe, wobei erfindungsgemäß an den Befestigungsflansch ein Ringbund angeformt ist, der in den Innenumfang der Bremsscheibe einragt. Damit kann vorteilhaft vermieden werden, dass wiederum Regenwasser und Schmutz über die Verbindungsbereiche, die in der Regel zum Ausgleich von Wärmespannungen Durchbrüche aufweisen, zu der äußeren Reibfläche gelangen können.

Der Ringbund kann dabei im Längsschnitt gesehen zumindest bis zur Rotationsebene der Kühlkanäle in die Innenumfangsfläche der Bremsscheibe einragen. Damit ist ebenfalls mit fertigungstechnisch besonders einfachen Mitteln sichergestellt, dass die einströmende Kühlluft aerodynamisch günstig direkt in die Kühlluftkanäle umgelenkt wird.

Zur Vermeidung von Kriechströmen durch Kapillarwirkung und durch die Oberflächenspannung des Regenwassers wird ferner vorgeschlagen, dass der Ringbund mit einem definierten Umfangsspiel, bevorzugt > 1 mm, gegenüber dem Innenumfang der Bremsscheibe ausgeführt ist.

Des weiteren kann der Ringbund mit einer abgeschrägten Stirnfläche derart gestaltet sein, dass eine ringförmige Strömungs-Abrisskante im radial innenliegenden Mündungsbereich der Kühlkanäle gebildet ist, die somit einen aerodynamisch günstigen Übergang der Kühlluftströmung vom Ringbund in die Kühlkanäle sicherstellt.

Dazu kann ferner zumindest eine der Reibscheiben an ihrem Innenumfang mit einer umlaufenden Anfasung zur Erweiterung des Mündungsbereiches der Kühlkanäle versehen sein, um eine weitgehendst turbulenzfreie Einströmung im Mündungsbereich und eine noch verbesserte Ableitung von Regenwasser in die Längskanäle herzustellen. Im Längsschnitt gesehen kann in besonders bevorzugter Weise die an dem Ringbund gebildete Abrisskante in der Rotationsebene der Anfasung der korrespondierenden Reibscheibe liegen.

Ein Ausführungsbeispiel der Erfindung ist im folgenden mit weiteren Einzelheiten näher erläutert. Die schematische Zeichnung zeigt in:
- **Fig. 1**: einen teilweisen Längsschnitt durch eine gebaute Bremsscheibe für Scheibenbremsen von Kraftfahrzeugen, mit einem Nabentopf und einer innehbelüfteten Bremsscheibe, die mittels Schrauben miteinander verbunden sind, sowie mit einem Abschirmblech; und
- **Fig. 2**: eine Einzelheit Z der **Fig. 1** mit teilweiser Darstellung des Ringbundes mit Abrisskante und der Anfasung der äußeren Reibscheibe.

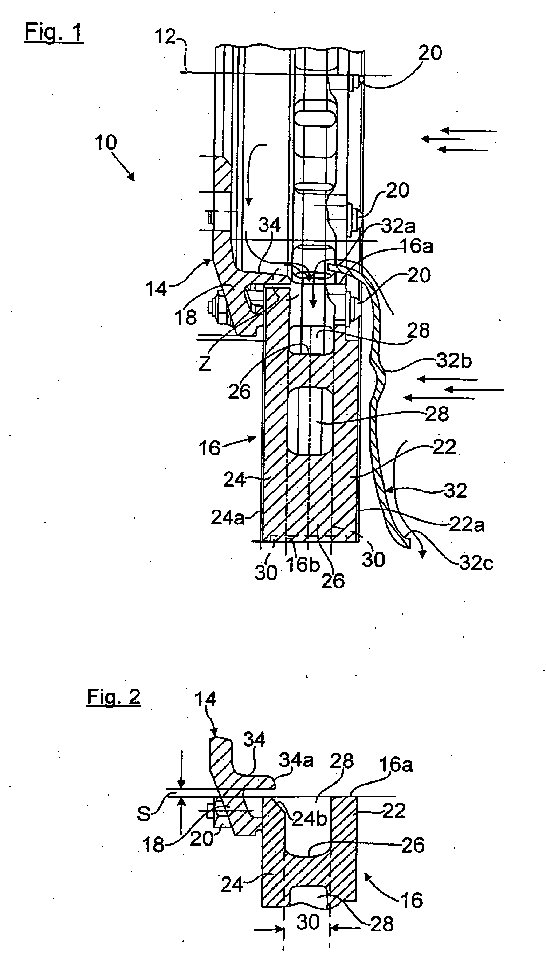

In der **Fig. 1** ist mit 10 eine innenbelüftete Scheibenbremse für Kraftfahrzeuge bezeichnet, von der jedoch nur die unterhalb einer Drehachse 12 liegende Hälfte dargestellt ist, die obere Hälfte ist sich spiegelbildlich gleich vorzustellen. Soweit nicht beschrieben, ist die Scheibenbremse 10 bekannter Bauart. Der Bremssattel mit den Bremsbelägen ist nicht dargestellt.

Die Scheibenbremse 10 weist als gebaute Konstruktion einen Nabentopf 14 aus Stahl und eine ringförmige Bremsscheibe 16 aus geeignetem Material auf, z.B. Metallwerkstoffen, C-Faser-Material (CCM), C-faserverstärktem Keramik-Kompositwerkstoff (C/SiC), etc.

An den Nabentopf 14 ist radial außen liegend ein Befestigungsflansch 18 ausgebildet, der an dem Innenumfangsbereich der Bremsscheibe 16 anliegt und mittels mehrerer, umfangsverteilter Schrauben 20 mit der Bremsscheibe 16 in bekannter Weise fest verbunden ist.

Zum Ausgleich von Wärmespannungen aufgrund unterschiedlicher Ausdehnungskoeffizienten zwischen dem Nabentopf 14 und der Bremsscheibe 16 sind zwischen den Schrauben 20 liegende, auf der Zeichnung nicht ersichtliche Durchbrüche im Befestigungsflansch 18 vorgesehen.

Die Bremsscheibe 16 setzt sich in bekannter Weise aus einem inneren Reibring 22 und einem äußeren Reibring 24 zusammen, die über angeformte Stege 26 fest miteinander verbunden sind.

Zwischen den Stegen 26 sind mehrere, umfangsverteilte Kühlkanäle 28 gebildet, die in bekannter Weise sichelförmig mit überwiegend radialer Ausrichtung ausgeführt sind und die ähnlich einer zentrifugal wirkenden Strömungspumpe bei sich drehender Bremsscheibe 16 Kühlluft vom Innenumfang 16a der Bremsscheibe 16 nach außen zum Außenumfang 16b fördern.

Die Kühlluftkanäle 28 sind dabei sowohl zum Innenumfang 16a als auch zum Außenumfang 16b der Bremsscheibe 16 offen ausgeführt und liegen in einer einheitlichen Rotationsebene 30 (gestrichelte Linien in **Fig. 1 und 2**).

Benachbart zur inneren Reibscheibe 22 ist an dem Bremssattelträger (Radträger - nicht dargestellt) ein im Wesentlichen ringförmiges Abschirmblech 32 befestigt, das sich radial und etwa parallel zur Bremsfläche 22a der Reibscheibe 22 erstreckt.

An das Abschirmblech 32 an dessen Innenumfang ist ein im Wesentlichen axial ausgerichteter, ringförmiger Kragen 32a angeformt, der sich wie aus **Fig. 1** ersichtlich ist etwa bis zur Rotationsebene 30 der Kühlkanäle 28 erstreckt.

Neben einer etwa ringförmigen Versteifungssicke 32b ist radial außen liegend an das Abschirmblech 32 eine ebenfalls ringförmig verlaufende Abweislippe 32c angeformt, die sich von der Reibfläche 22a weg in axialer Richtung erstreckt. Die Abweislippe 32c kann über den gesamten Umfang des Abschirmbleches 32 oder nur über einen Teilbereich dazu ausgeführt sein.

An den Befestigungsflansch 18 des Nabentopfes 14 ist ein Ringbund 34 angeformt, der sich in den Innenumfang 16a der Bremsscheibe 16 hinein erstreckt.

Der Ringbund 34 (vgl. **Fig. 2**) weist ein Umfangsspiel s von > 1 mm zum Innenumfang 16a der Bremsscheibe 16 auf und endet im Wesentlichen ebenfalls in der Rotationsebene 30 der Kühlkanäle 28 der Bremsscheibe 16.

Der Ringbund 34 ist ferner mit einer abgeschrägten Stirnfläche derart gestaltet, dass er eine ringförmige Strömungs-Abrisskante 34a bildet, die im radial innenliegenden Mündungsbereich der Kühlkanäle 28 positioniert ist.

Die Abrisskante 34a liegt des Weiteren einer Anfasung 24b gegenüber, die an der äußeren Reibscheibe 24 an ihrem Innenumfang 16a zur Erweiterung des Mündungsbereiches der Kühlkanäle 28 vorgesehen ist.

Die beschriebenen Mittel 34, 32a bewirken, dass über die mit Pfeilen eingezeichnete Kühlluftströmung bei entsprechenden Witterung- und Umgebungsbedingungen mitgeführtes Regenwasser und/oder Schmutz von den Reibflächen 22a, 24a der Bremsscheibe 16 ferngehalten werden.

So bewirkt der Kragen 32a an dem Abschirmblech 32, dass die Kühlluft nicht auf die Reibfläche 22a der Reibscheibe 22 gelangt; vielmehr wird die axial in den Nabenbereich bzw. in den Innenumfang 16a der Bremsscheibe 16 einströmende Kühlluft unter Abschirmung der Reibfläche 22a direkt in den Einströmbereich der zum Innenumfang 16a offenen Kühlkanäle 28 geleitet.

Ferner wird an dem Abschirmblech 32 radial nach außen strömendes Regenwasser von der Reibfläche 22a weg über die Abweislippe 32c abgeführt, ohne dass ggf. eine Fahrtwind bedingte Rückströmung erfolgen kann.

Des Weiteren wird durch den an den Befestigungsflansch 18 angeformten Ringbund 34 sichergestellt, dass im Nabenbereich bzw. in den Innenumfang 16a der Bremsscheibe 16 eingetragenes Regenwasser nicht auf die Reibfläche 24a der äußeren Reibscheibe 24 gelangen kann.

Der Ringbund 34 leitet, wie aus den **Fig. 1 und 2** ersichtlich ist, die Kühlluft wiederum über die Abrisskante 34a und die Anfasung 24b unter Abschirmung der Reibfläche 24a in den unmittelbaren Einströmbereich der Kühlkanäle 28 bzw. in deren Rotationsebene 30.

## Patentansprüche

1. Innenbelüftete Scheibenbremse für Fahrzeuge, insbesondere für Kraftfahrzeuge, mit einem Nabentorpf (14) und einer hieran angebundenen, mehrere Kühlkanäle (28) aufweisenden ringförmigen Bremsscheibe (16) die durch zwei Reibringe (22, 24) oder Reibscheiben gebildet ist, die über die Kühlkanäle (28) begrenzende Stege (26) miteinander verbunden sind, wobei die Kühlkanäle (28) umfangsverteilt angeordnet sind und jeweils beginnend am Innenumfang der Bremsscheibe (16) radial nach außen verlaufend in die Außenumfangsfläche der Bremsscheibe (16) münden, und wobei. Mittel vorgesehen sind die einen Kühlluftstrom unmittelbar in einen oder zu einem Einströmbereich der Kühlkanäle (28) leiten, wobei ein Mittel durch wenigstens ein Abschirmblech (32) ausgebildet ist, durch wenigstens ein **dadurch gekennzeichnet, dass**
ein weiteres Mittel durch einem am Nabentopf (14) angeformten Leitsteg oder Ringbund (34) ausgebildet ist, der in die Bremsscheibe (16) zum Kühlkanal-Einströmbereich hin einragt, wobei der Leitsteg oder Ringbund (34) an einem Befestigungsflansch (18) des Nabentopfes (14) angeformt ist, an dem die Bremsscheibe (16) mittels wenigstens eines Befestigungsmittels (20) angeflanscht ist, und
dass an dem Abschirmblech (32) ein axial nach innen ragender, ringförmiger Kragen (32a) vorgesehen ist, der in den Innenumfang (16a) der Bremsscheibe (16) einragt.

2. Scheibenbremse nach Anspruch 1, **dadurch gekennzeichnet, dass** das Abschirmblech (32) an der innenliegenden Reibscheibe (22) an deren ringförmiger Reibfläche (22a) angrenzt und sich im Wesentlichen über die Reibfläche (22a) erstreckt.

3. Scheibenbremse nach Anspruch 1 oder 2, **dadurch gekennzeichnet, dass** der ringförmige Kragen (32a) im Längsschnitt gesehen sich mindestens bis zur Rotationsebene (30) der Kühlkanäle (28) erstreckt.

4. Scheibenbremse nach einem der Ansprüche 1 bis 3, **dadurch gekennzeichnet, dass** der ringförmige Kragen (32a) unmittelbar an das Abschirmblech (32) angeformt ist.

5. Scheibenbremse nach einem der vorhergehenden Ansprüche, **dadurch gekennzeichnet, dass** der Außenumfang des Abschirmbleches (32) eine von der Reibfläche (22a) der Bremsscheibe (16) weg verlaufende, ringförmige Abweislippe (32c) aufweist.

6. Scheibenbremse nach einem der vorhergehenden Ansprüche , **dadurch gekennzeichnet, dass** der Leitsteg oder Ringbund (34) im Längsschnitt gesehen zumindest bis zur Rotationsebene (30) der Kühlkanäle (28) in die Innenumfangsfläche (16a) nasenartig einragt.

7. Scheibenbremse nach einem der vorhergehenden Ansprüche, **dadurch gekennzeichnet, dass** der Leitsteg oder Ringbund (34) mit einem definierten Umfangsspiel s, bevorzugt > 1 mm, gegenüber dem Innenumfang (16a) der Bremsscheibe (16) ausgeführt ist.

8. Scheibenbremse nach einem der vorhergehenden Ansprüche, **dadurch gekennzeichnet, dass** der Leitsteg oder Ringbund (34) mit einer abgeschrägten Stirnfläche derart gestaltet ist, dass eine ringförmige Strömungs-Abrisskante (34a) im radial innenliegenden Mündungsbereich der Kühlkanäle (28) gebildet ist.

9. Scheibenbremse nach einem der vorhergehenden Ansprüche, **dadurch gekennzeichnet, dass** die Bremsscheibe (16) oder zumindest eine der die Bremsscheibe (16) bildenden Reibscheiben (22, 24) an ihrem Innenumfang (16a) mit einer umlaufenden Anfasung (24b) zur Erweiterung des Mündungsbereiches der Kühlkanäle (28) versehen ist.

10. Scheibenbremse nach Anspruch 8 oder 9, **dadurch gekennzeichnet, dass** im Längsschnitt gesehen die an dem Leitsteg oder Ringbund (34) gebildete Abrisskante (34a) in der Rotationsebene der Anfasung (24a) der korrespondierenden Reibscheibe (24) liegt.

## Claims

1. Internally ventilated disc brake for vehicles, in particular for motor vehicles, comprising a hub well (14) and an annular brake disc (16) which is connected to said hub well, comprises a plurality of cooling channels (28) and is formed by two friction rings (22, 24) or friction discs which are interconnected via webs (26) delimiting the cooling channels (28), the cooling channels (28) being arranged so as to be distributed over the circumference and each channel, extending radially outwards starting at the inner circumference of the brake disc (16), discharging into the external circumferential face of the brake disc (16), means being provided which conduct a flow of cooling air directly into or towards an inlet region of the cooling channels (28), a means being formed by at least one valance (32), **characterised in that** an additional means is formed by a guide web or collar (34) which is integrally formed on the hub well (14) and which projects into the brake disc (16) towards the cooling channel inlet region, the guide web or collar (34) being integrally formed on a attachment flange (18) of the hub well (14), on which flange the brake disc (16) is flanged by means of at least one attachment means (20), and **in that** an axially inwardly projecting, annular collet (32a) is provided on the valance (32) and projects into the inner circumference (16a) of the brake disc (16).

2. Disc brake according to claim 1, **characterised in that** the valance (32) on the internal friction disc (22) adjoins the annular friction surface (22a) thereof and extends substantially beyond the friction surface (22a).

3. Disc brake according to either claim 1 or claim 2, **characterised in that** the annular collet (32a), when viewed in longitudinal cross-section, extends at least up to the plane of rotation (30) of the cooling channels (28).

4. Disc brake according to any of claims 1 to 3, **characterised in that** the annular collet (32a) is integrally formed directly on the valance (32).

5. Disc brake according to any of the preceding claims, **characterised in that** the outer periphery of the valance (32) comprises an annular deflector lip (32c) which extends away from the friction surface (22a) of the brake disc (16).

6. Disc brake according to any of the preceding claims, **characterised in that** the guide web or collar (34), when viewed in longitudinal cross-section, projects in a lug-like manner into the inner circumferential face (16a) at least up to the plane of rotation (30) of the cooling channels (28).

7. Disc brake according to any of the preceding claims, **characterised in that** the guide web or collar (34) is configured with defined circumferential play s, preferably > 1 mm, relative to the inner circumference (16a) of the brake disc (16).

8. Disc brake according to any of the preceding claims, **characterised in that** the guide web or collar (34) is configured with a bevelled end face in such a way that an annular flow stall edge (34a) is formed in the radially inner discharge region of the cooling channels (28).

9. Disc brake according to any of the preceding claims, **characterised in that** the brake disc (16) or at least one of the friction discs (22, 24) forming the brake disc (16) are provided on their inner circumference (16a) with circumferential chamfering (24b) for enlarging the discharge region of the cooling channels (28).

10. Disc brake according to either claim 8 or claim 9, **characterised in that**, when viewed in longitudinal cross-section, the stall edge (34a) formed on the guide web or collar (34) is located in the plane of rotation of the chamfering (24a) of the corresponding friction disc (24).

## Revendications

1. Frein à disque ventilé de l'intérieur pour véhicules, en particulier pour véhicules automobiles, avec un pot de moyeu (14) et un disque de frein (16) annulaire qui y est raccordé, qui présente plusieurs canaux de refroidissement (28) et qui est formé de deux bagues de friction (22, 24) ou disques de friction qui sont raccordé(e)s l'une à l'autre ou l'un à l'autre par le biais d'entretoises (26) limitant les canaux de refroidissement (28), les canaux de refroidissement (28) étant disposés de façon répartie sur la circonférence et débouchant respectivement dans la face circonférentielle extérieure du disque de frein (16) en étant orientés radialement vers l'extérieur en commençant sur la circonférence intérieure du disque de frein (16), et des moyens étant prévus qui dirigent un flux d'air de refroidissement directement dans une zone d'admission des canaux de refroidissement (28) ou vers cette zone, un moyen étant constitué par au moins une tôle d'écran (32),
**caractérisé en ce**
**qu'**un autre moyen est constitué par une entretoise de guidage ou un collet annulaire (34) qui est formé(e) solidairement sur le pot de moyeu (14) et qui fait saillie dans le disque de frein (16) vers la zone d'admission des canaux de refroidissement, l'entretoise de guidage ou le collet annulaire (34) étant formé(e) sur une bride de fixation (18) du pot de moyeu (14) sur laquelle le disque de frein (16) est bridé au moyen d'au moins un moyen de fixation (20),
et en ce qu'il est prévu sur la tôle d'écran (32) une collerette (32a) annulaire qui fait saillie vers l'intérieur axialement et qui fait saillie dans la circonférence intérieure (16a) du disque de frein (16).

2. Frein à disque selon la revendication 1, **caractérisé en ce que** la tôle d'écran (32), sur le disque de friction (22) situé à l'intérieur, est limitrophe sur la face de frottement (22a) annulaire de celui-ci et s'étend essentiellement sur la face de friction (22a).

3. Frein à disque selon la revendication 1 ou 2, **caractérisé en ce que** la collerette (32a) annulaire, vue en coupe longitudinale, s'étend au moins jusqu'au plan de rotation (30) des canaux de refroidissement (28).

4. Frein à disque selon une des revendications 1 à 3, **caractérisé en ce que** la collerette (32a) annulaire est formée solidairement sur la tôle d'écran (32) et cela de façon directe.

5. Frein à disque selon une des revendications précédentes, **caractérisé en ce que** la circonférence extérieure de la tôle d'écran (32) présente une lèvre de refoulement (32c) annulaire qui s'éloigne de la face de friction (22a) du disque de frein (16).

6. Frein à disque selon une des revendications précédentes, **caractérisé en ce que** l'entretoise de guidage ou le collet annulaire (34), vu(e) en coupe longitudinale, fait saillie à la façon d'un bec dans la face circonférentielle intérieure (16a) au moins jusqu'au plan de rotation (30) des canaux de refroidissement (28).

7. Frein à disque selon une des revendications précédentes, **caractérisé en ce que** l'entretoise de guidage ou le collet annulaire (34) est réalisé(e) avec un jeu circonférentiel s défini, de préférence > 1 mm, par rapport à la circonférence intérieure (16a) du disque de frein (16).

8. Frein à disque selon une des revendications précédentes, **caractérisé en ce que** l'entretoise de guidage ou le collet annulaire (34) est constitué(e) avec une face frontale biseautée de sorte qu'il est formé une arête de décollage d'écoulement (34a) annulaire dans la zone de débouché des canaux de refroidissement (28) qui est située à l'intérieur radialement.

9. Frein à disque selon une des revendications précédentes, **caractérisé en ce que** le disque de frein (16) ou au moins un des disques de friction (22, 24) formant le disque de frein (16) est muni sur sa circonférence intérieure (16a) d'un chanfrein (24b) circonférentiel pour élargir la zone de débouché des canaux de refroidissement (28).

10. Frein à disque selon la revendication 8 ou 9, **caractérisé en ce que**, vue en coupe longitudinale, l'arête de décollage (34a) formée sur l'entretoise de guidage ou le collet annulaire (34) est située dans le plan de rotation du chanfrein (24a) du disque de friction (24) correspondant.
